(19) Europäisches Patentamt
European Patent Office
Office européen des brevets

(11) **EP 4 746 380 A1**

(12) **EUROPEAN PATENT APPLICATION**
published in accordance with Art. 153(4) EPC

(43) Date of publication:
**20.05.2026 Bulletin 2026/21**

(21) Application number: **24893002.6**

(22) Date of filing: **12.09.2024**

(51) International Patent Classification (IPC):
**H04L 67/10** (2022.01)

(52) Cooperative Patent Classification (CPC):
**H04L 47/22; H04L 47/2441; H04L 67/10**

(86) International application number:
**PCT/CN2024/118498**

(87) International publication number:
**WO 2025/107843 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.11.2023 CN 202311563804**

(71) Applicant: **Tencent Technology (Shenzhen)
Company Limited
Shenzhen, Guangdong 518057 (CN)**

(72) Inventors:
• **XU, Bing**
  **Shenzhen, Guangdong 518057 (CN)**
• **CHEN, Yuan**
  **Shenzhen, Guangdong 518057 (CN)**
• **ZENG, Junliang**
  **Shenzhen, Guangdong 518057 (CN)**

(74) Representative: **EP&C
P.O. Box 3241
2280 GE Rijswijk (NL)**

(54) **TRAFFIC TRANSMISSION CONTROL METHOD, APPARATUS, AND SYSTEM, DEVICE, STORAGE MEDIUM, AND PROGRAM PRODUCT**

(57) Disclosed in embodiments of the present application are a traffic transmission control method, apparatus, and system, a device, a storage medium, and a program product. The method comprises: in response to a traffic transmission management request for an edge node device, obtaining a plurality of pieces of traffic metadata; grouping the plurality of pieces of traffic metadata to obtain a plurality of metadata groups; on the basis of a bandwidth upper limit value of the edge node device, determining bandwidth allocation data corresponding to each metadata group among the plurality of metadata groups, wherein the bandwidth allocation data comprises the maximum bandwidth and the minimum bandwidth; and generating a traffic transmission control instruction on the basis of the plurality of metadata groups and the bandwidth allocation data, and sending the traffic transmission control instruction to the edge node device, so that the edge node device controls data traffic transmitted to an electronic device.

FIG. 4

**Description**

RELATED APPLICATION

This application claims priority to Chinese Patent Application No. 202311563804.8, entitled "DISTRIBUTED CLOUD-BASED TRAFFIC TRANSMISSION CONTROL METHOD, AND RELATED APPARATUS AND SYSTEM" and filed with the China National Intellectual Property Administration on November 21, 2023.

FIELD OF THE TECHNOLOGY

This application relates to the field of communication technologies, and specifically, to a traffic transmission control method, apparatus, and system, a device, a storage medium, and a program product.

BACKGROUND OF THE DISCLOSURE

Distributed cloud is an extension of capabilities of central cloud, and aims to provide ubiquitous cloud computing services, to satisfy requirements of proximity access such as edge data processing and real-time computing. Compared with the central cloud, an application scenario in which the distributed cloud is used at any position and is flexibly changeable determines features of lightweight startup and being small but robust of the distributed cloud. Compared with a manner of interconnecting nodes of the central cloud by using a high-bandwidth private line, nodes of the distributed cloud are interconnected by using a public network with lower costs, and bandwidth resources can be purchased as required, as long as requirements of the nodes in most cases are satisfied.

However, a disadvantage of the interconnection with the public network is also apparent. Because a bandwidth upper limit is small, burst traffic easily causes congestion of a transmission channel, and service traffic of each system in a cloud node randomly preempts the limited bandwidth resources, easily resulting in that important data cannot be transmitted in time.

Therefore, a technical problem of poor stability of cross-node traffic transmission in an existing distributed cloud scenario needs to be resolved urgently.

SUMMARY

To resolve the foregoing technical problem, embodiments of this application provide a traffic transmission control method, apparatus, and system, an electronic device, a computer-readable storage medium, and a computer program product.

In one aspect, an embodiment of this application provides a traffic transmission control method, executable by an electronic device, and including:

obtaining a plurality of pieces of metadata in response to receiving a traffic transmission management request;

grouping the plurality of pieces of metadata, to obtain a plurality of metadata groups;

determining, according to a preset bandwidth upper limit of an edge node device, bandwidth allocation data corresponding to each of the plurality of metadata groups, the bandwidth allocation data comprising a maximum bandwidth and a minimum bandwidth; and

generating a traffic transmission control instruction according to the plurality of metadata groups and the bandwidth allocation data, and transmitting the traffic transmission control instruction to the edge node device, in order to control data traffic transmitted to the electronic device.

In another aspect, an embodiment of this application provides a traffic transmission control apparatus, including:

a metadata obtaining module, configured to obtain a plurality of pieces of metadata in response to receiving a traffic transmission management request;

a grouping module, configured to group the plurality of pieces of metadata, to obtain a plurality of metadata groups;

a bandwidth allocation module, configured to determine, according to a preset bandwidth upper limit of an edge node device, bandwidth allocation data corresponding to each of the plurality of metadata groups, the bandwidth allocation data comprising a maximum bandwidth and a minimum bandwidth; and

a transmission control module, configured to generate a traffic transmission control instruction according to the plurality of metadata groups and the bandwidth allocation data, and transmit the traffic transmission control instruction to the edge node device, in order to control data traffic transmitted to the electronic device.

In another aspect, an embodiment of this application further provides another traffic transmission control method, executable by an electronic device, and including:

receiving a traffic transmission control instruction transmitted by a central node device, the traffic transmission control instruction carrying bandwidth allocation data corresponding to each of a plurality of metadata groups, and the bandwidth allocation data comprising a maximum bandwidth and a minimum bandwidth;

transmitting, in response to the traffic transmission control instruction and according to the minimum bandwidth corresponding to each metadata group, data traffic corresponding to each metadata group to the central node device;

obtaining a real-time congestion detection result of a traffic transmission channel between the central node device and the electronic device; and

adjusting, based on the real-time congestion detection result, the minimum bandwidth and the maximum bandwidth corresponding to each metadata group, the data traffic transmitted to the central node device.

In another aspect, an embodiment of this application further provides another traffic transmission control apparatus, including:

a control instruction receiving module, configured to receive a traffic transmission control instruction transmitted by a central node device, the traffic transmission control instruction carrying bandwidth allocation data corresponding to each of a plurality of metadata groups, and the bandwidth allocation data comprising a maximum bandwidth and a minimum bandwidth;

an initial transmission module, configured to transmit, in response to the traffic transmission control instruction and according to the minimum bandwidth corresponding to each metadata group, data traffic corresponding to each metadata group to the central node device; and

a rate limiting implementation module, configured to obtain a real-time congestion detection result of a traffic transmission channel between the central node device and an electronic device; and adjust, based on the real-time congestion detection result, the minimum bandwidth and the maximum bandwidth corresponding to each metadata group, the data traffic transmitted to the central node device.

In another aspect, an embodiment of this application further provides another traffic transmission control system, including a central node device and an edge node device, a metadata management module and a gateway controller being deployed on the central node device, and a rate limiting implementation module being deployed on the edge node device,

the metadata management module being configured to obtain a plurality of pieces of traffic metadata in response to receiving a traffic transmission management request; group the plurality of pieces of traffic metadata, to obtain a plurality of metadata groups; and determine, according to a preset bandwidth upper limit of the edge node device, bandwidth allocation data corresponding to each of the plurality of metadata groups, the bandwidth allocation data comprising a maximum bandwidth and a minimum bandwidth;

the gateway controller being configured to generate a traffic transmission control instruction according to the plurality of metadata groups and the bandwidth allocation data, and transmit the traffic transmission control instruction to the rate limiting implementation module; and

the rate limiting implementation module being configured to transmit, in response to the traffic transmission control instruction and according to the minimum bandwidth corresponding to each metadata group, data traffic corresponding to each metadata group to the central node device; obtain a real-time congestion detection result of a traffic transmission channel between the central node device and the edge node device; and adjust, based on the real-time congestion detection result, the minimum bandwidth and the maximum bandwidth corresponding to each metadata group, the data traffic transmitted to the central node device.

In another aspect, an embodiment of this application provides an electronic device, including: one or more processors; and a memory, configured to store one or more programs, the one or more programs, when executed by the one or more processors, causing the electronic device to implement operations of the foregoing traffic transmission control method.

In another aspect, an embodiment of this application provides a computer-readable storage medium, having computer-readable instructions stored therein, the computer-readable instructions, when executed by a processor of a computer, causing the computer to implement operations of the foregoing traffic transmission control method.

In another aspect, an embodiment of this application provides a computer program product, including a computer program, the computer program, when executed by a processor, implementing operations of the foregoing traffic transmission control method.

BRIEF DESCRIPTION OF THE DRAWINGS

FIG. 1 is a schematic diagram of a framework of cross-node traffic transmission in a distributed cloud scenario according to this application.

FIG. 2 is a schematic diagram of a processing procedure of a metadata management module in the framework shown in FIG. 1.

FIG. 3 is a schematic diagram of a processing procedure of a rate limiting implementation module in the framework shown in FIG. 1.

FIG. 4 is a flowchart of a traffic transmission control method according to an exemplary embodiment of this application.

FIG. 5 is a flowchart of a traffic transmission control method according to another exemplary embodiment of this application.

FIG. 6 is a schematic diagram of an edge node device sequentially increasing a transmission bandwidth corresponding to each metadata group according to this application.

FIG. 7 is a block diagram of a traffic transmission control apparatus according to an exemplary embodiment of this application.

FIG. 8 is a block diagram of a traffic transmission control apparatus according to another exemplary embodiment of this application.

FIG. 9 is a schematic diagram of a structure of an electronic device for implementing an embodiment of this application.

DESCRIPTION OF EMBODIMENTS

Exemplary embodiments are described in detail herein, and examples of the exemplary embodiments are shown in the accompanying drawings. When the following descriptions are made with reference to the accompanying drawings, unless otherwise indicated, same numbers in different accompanying drawings represent same or similar elements. The following implementations described in the following exemplary embodiments do not represent all implementations that are consistent with this application. Instead, they are merely examples of the apparatus and method according to some aspects of this application as recited in the appended claims.

The block diagrams shown in the accompanying drawings are merely functional entities and do not necessarily correspond to physically independent entities. To be specific, such functional entities may be implemented in a form of software, or implemented in one or more hardware modules or integrated circuits, or implemented in different networks and/or processor apparatuses and/or microcontroller apparatuses.

The flowcharts shown in the accompanying drawings are merely examples for descriptions, do not necessarily include all content and operations/steps, and are not necessarily performed in the described orders. For example, some operations/steps may be further divided, while some operations/steps may be combined or partially combined. Therefore, an actual execution order may change according to an actual case.

"Plurality of" mentioned in this application means two or more. "And/or" describes an association relationship for describing associated objects and represents that three relationships may exist. For example, A and/or B may represent the following three cases: Only A exists, both A and B exist, and only B exists. The character "/" generally represents that the associated object is in an "or" relationship.

In the specification, claims, and accompanying drawings of this application, the terms "first", "second", "third", "fourth", or the like are intended to distinguish between different objects but do not indicate a particular order. In addition, the terms "include", "have", and any variants thereof are intended to cover non-exclusive inclusion. For example, a process, method, system, product, or device that includes a series of steps or units is not limited to a listed step or unit, but further includes an unlisted step or unit, or further includes another step or unit inherent to the process, method, product, or device.

In the field of cloud computing, distributed cloud is an architecture mode based on distributed computing and cloud computing concepts. The distributed cloud distributes computing, storage, and network resources on different physical or virtual nodes, and the nodes work collaboratively by using a network, to provide high-performance, high-availability, and high-scalability services. During daily use, cross-cloud node data transmission is almost ubiquitous due to function and resource limitations of a single distributed cloud node.

However, existing cross-cloud node database transmission solutions still have the following problems:

1. Channel congestion easily occurs

Insufficient bandwidth redundancy of an edge node device has become a bottleneck of cross-node data transmission. In addition, with many systems in a cloud node, a large-traffic transmission requirement may occur at any time. Large-traffic transmission tasks initiated by a plurality of systems at the same time may deplete bandwidth resources, resulting in channel congestion. Consequently, a series of problems such as failure to deliver a control command and lost contact with a cloud node are caused, and reliability of cloud services is reduced. Consequently, customer services are affected.

2. Disordered competition for bandwidth resources

In existing distributed cloud cross-node traffic transmission solutions, important traffic with a higher priority such as "customer service" or "high availability management" is mixed with unimportant traffic with a lower priority such as "node upgrade" or "file pull". The important traffic and the unimportant traffic compete with each other to preempt limited bandwidth resources of the edge node device. Traffic requirements are not large in most cases, and these two types of traffic transmission may be used at staggered peaks without interfering with each other. However, in a scenario with a large traffic requirement, due to lack of an effective management mechanism, bandwidths are allocated randomly, and the important traffic probably cannot be transmitted in a timely and effective manner, resulting in product experience that does not satisfy expectations.

To resolve the foregoing problems, the technical solutions of this application propose managing and controlling a public network bandwidth of an edge node device to avoid traffic runaway, thereby effectively improving stability of cross-node traffic transmission in a distributed cloud scenario and improving product experience.

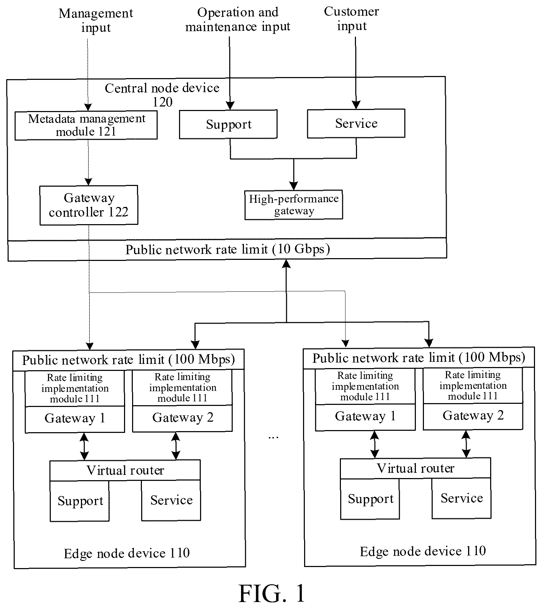

First, refer to FIG. 1. FIG. 1 is a schematic diagram of a framework of cross-node traffic transmission in a distributed cloud scenario according to this application. As can be seen from FIG. 1, a complete cross-node traffic transmission link includes three parts: an edge node device 110 for sending, a public network for rate limiting transmission, and a central node device 120 for processing. In this application, a metadata management module 121 and a gateway controller 122 are further disposed in the central node device 120, and a rate limiting implementation module 111 is disposed in the edge node device 110. Traffic classification is implemented by using the functional modules, traffic transmission between cloud nodes is optimized, and system stability is improved.

The following describes content of the framework shown in FIG. 1.

The edge node device 110 for sending means that service traffic is first sent from an internal system of the edge node device 110 and passes through a virtual router, and data is routed to any gateway according to traffic five-tuple information (a source IP, a destination IP, a source port, a destination port, a communication protocol). After receiving the data, the gateway sequentially completes operations such as data encryption and compression, and finally delivers the data to the public network. Internal systems of the edge node device 110 are numerous. Generally, the edge node device 110 has hundreds of internal systems inside, and each system may initiate a transmission request at any time. Therefore, generally, a traffic requirement of the edge node device 110 has large uncertainty.

The public network for rate limiting transmission means that a public network transmission capability is provided by a public network operator, and it is necessary to purchase bandwidth resources from the operator in advance. Due to cost limitations, a public network bandwidth of an edge node is generally low (about 50 Mbps to 100 Mbps), and data delivered by a traffic gateway to the public network is rate-limited by the operator with some data packets being discarded and some data packets being transmitted normally. However, public network bandwidth resources of the central node device 120 are sufficient (about 10 Gbps), and may receive all arriving data. Therefore, from asymmetry of resources on the central node device 120 and the edge node device 110, it can be seen that a bottleneck of an entire transmission system is a public network bandwidth of the edge node device 110.

The central node device 120 for processing means that the data is received by a high-performance gateway of the central node device 120 after public network transmission is completed. The gateway sequentially completes operations such as data decompression and decryption to obtain original data. According to different destination IPs and ports in the data, the data is transmitted to different backend system modules respectively. Each backend system module transmits data back according to a processing result, or ends an entire transmission procedure.

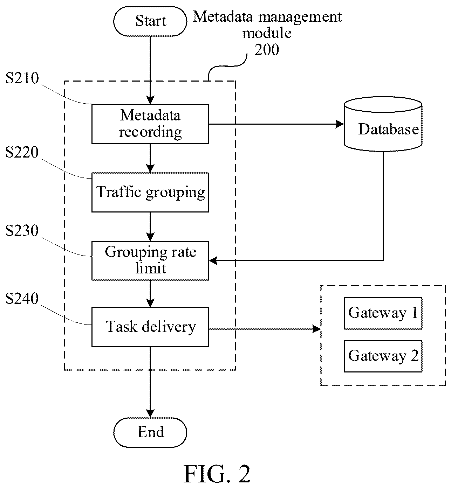

The metadata management module is responsible for managing basic information of transmission traffic between the cloud nodes. A processing procedure of the metadata management module is shown in FIG. 2, including the following operations.

S210: A metadata management module 200 serving as a system management entry provides a function of recording traffic metadata, and persists the recorded traffic metadata into a database.

S220: When an edge node device needs to be managed, a system loads the traffic metadata from the database, and groups and sorts each traffic with reference to a traffic control factor, to obtain metadata groups sorted by priorities.

S230: Set a bandwidth upper limit of each metadata group according to a bandwidth upper limit of the edge node device, to obtain grouping control information of the metadata groups.

S240: Encapsulate the grouping control information into a control command, and deliver the control command to a rate limiting implementation module on the edge node device.

Since the rate limiting implementation module is deployed on the traffic gateway of the edge node device, FIG. 2 shows that the control command is delivered to the traffic gateway.

The traffic metadata mentioned in this embodiment of this application refers to an information set necessary for controlling traffic transmission, and includes, for example, routing information, a traffic control factor, and a bandwidth upper limit supported by each edge node device. The routing information is, for example, the foregoing traffic five-tuple information, that is, a source IP, a destination IP, a source port, a destination port, and a communication protocol. The bandwidth upper limit supported by each edge node device is a maximum bandwidth supported by each edge node device.

The traffic control factor is a factor related to a service traffic transmission control policy, and each piece of routing information corresponds to a traffic control factor. For example, to ensure stability of a data transmission system, traffic with a high priority is to be transmitted preferentially, and therefore a priority may be used as a traffic control factor. For another example, importance of a traffic transmission operation triggered by a customer in the system is to be higher than importance of a traffic transmission operation automatically triggered by the system, and therefore the operation source may also be used as a traffic control factor. Exemplarily, the traffic control factor includes a priority, a timeliness level, an operation source, an expected bandwidth, and the like.

The gateway controller is responsible for managing an entire life cycle of the traffic gateway of the edge node device. The gateway controller is directly connected to the traffic gateway of the edge node device, receives the control command of the metadata management module, and delivers the control command to the rate limiting implementation module. The gateway controller keeps a heartbeat alarm with the edge node device, provides an alarm capability, and ensures availability of an edge gateway rate limiting module.

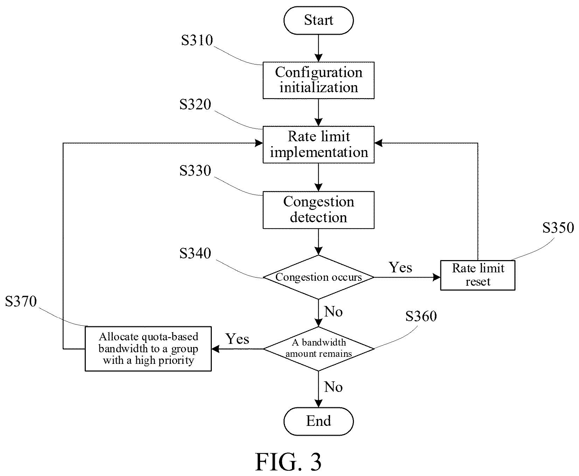

The rate limiting implementation module is responsible for executing a grouping rate limiting control command. A processing procedure of the rate limiting implementation module is shown in FIG. 3. The rate limiting implementation module is deployed on the traffic gateway of the edge node device. As can be seen from FIG. 3, during operation, the rate limiting implementation module performs the following operations.

S310: Receive a control command delivered by a gateway controller, and initialize its own configuration.

S320: Execute a rate limiting logic according to the control command.

S330: Detect a congestion status of a transmission channel regularly.

S340: Determine whether congestion currently occurs. When congestion currently occurs, S350 is performed, that is, dynamically adjust a rate upper limit of a group according to the congestion status. Otherwise, further determine whether a bandwidth amount remains, i.e., there is some bandwidth available for use. When the bandwidth amount remains, S370 is performed, that is, allocate bandwidth in terms of a fixed amount, i.e., quota-based bandwidth, to a group with a high priority.

An entire rate limiting control policy of the rate limiting implementation module may be summarized as increasing a rate upper limit when the system load is low, to improve entire efficiency; and reducing an upper limit of traffic with a low priority when the system load is high, to avoid congestion and improve transmission efficiency of important data, thereby achieving stability of entire cross-cloud node traffic transmission.

For detailed processes of grouping and grouping rate limiting involved in FIG. 2, and specific content of the entire rate limiting implementation policy involved in FIG. 3, refer to related descriptions in subsequent method embodiments, and details are not described herein.

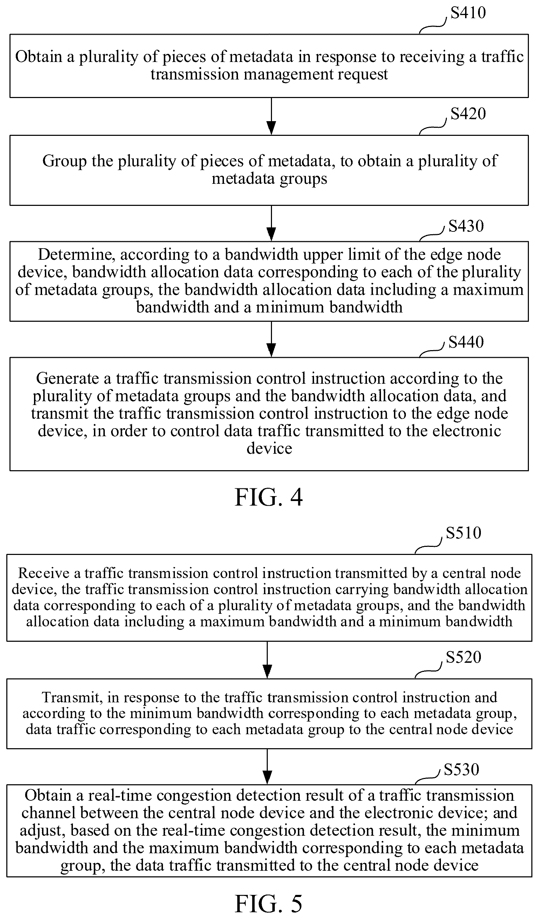

Refer to FIG. 4. FIG. 4 is a flowchart of a traffic transmission control method according to an exemplary embodiment of this application. The method is applicable to the architecture of cross-cloud node traffic transmission shown in FIG. 1, and is performed by an electronic device. Specifically, the method may be performed by the central node device 120 in the architecture shown in FIG. 1, or may be performed by the metadata management module 121 in the central node device 120.

As shown in FIG. 4, the exemplary traffic transmission control method includes S410 to S440. Details are described as follows:

S410: Obtain a plurality of pieces of metadata in response to receiving a traffic transmission management request.

The traffic transmission management request for controlling data traffic (specifically, service traffic) transmitted to the edge node device is initiated and sent by a public network resource manager. After the central node device and the edge node device respond to the traffic transmission management request, service traffic transmission between the central node device and the edge node device can be performed in order, thereby ensuring stability of the entire system. The public network resource manager refers to a network operator, but is not merely limited to a network operator in this embodiment, and may be determined based on an actual application scenario.

In embodiments of the present disclosure, the metadata refers to traffic metadata, i.e., the metadata describing attributes, characteristics, and behavior of service traffic itself, rather than the actual content carried by the service traffic. In response to receiving the traffic transmission management request from the network operator, the central node device first obtains traffic metadata recorded in a database. The recording of the traffic metadata in the database includes, but is not limited to, adding, updating, and deleting of the traffic metadata in the database. Exemplarily, the traffic metadata may be stored in the database in a form of a traffic five-tuple list.

Different pieces of traffic metadata correspond to different data transmission scenarios, that is, one piece of traffic metadata indicates a parameter required for service traffic transmission in one data transmission scenario. For example, <watch television> is a data transmission scenario, <listen to radio> is another data transmission scenario, and <system upgrade> is still another data transmission scenario. In different data transmission scenarios, paths of service traffic transmission are different from each other. In addition, different data transmission scenarios correspond to different service requirements.

S420: Group the plurality of pieces of metadata, to obtain a plurality of metadata groups.

Service traffic transmission requirements in different data transmission scenarios may appear at the same time, which may cause simultaneous occupation of public network resources, resulting in a traffic runaway problem such as channel congestion and disordered competition for bandwidth resources. Since the public network bandwidth of the edge node device has a large bottleneck, the traffic runaway problem often occurs in the edge node device.

To resolve the problem, the central node device first performs grouping processing on the plurality of pieces of obtained traffic metadata. A purpose of grouping is to reduce complexity of traffic transmission control, thereby improving efficiency of traffic control.

As described above, in an actual application scenario, there are hundreds of systems inside the edge node device, and each system may correspond to a data transmission scenario or a service scenario. When traffic transmission of each system is separately controlled, control complexity is very high, and resource burden on the entire system is increased.

Therefore, in this embodiment of this application, the plurality of pieces of traffic metadata is grouped, and traffic transmission control is performed by using the metadata group as a unit, rather than performing traffic transmission control by using each service scenario as a unit. When service scenarios of the hundreds of systems are grouped into 50 metadata groups, and the edge node device performs traffic transmission control on the 50 metadata groups separately, compared with performing transmission control on service traffic of the hundreds of systems, a large quantity of scheduling resources is apparently saved, and efficiency of traffic control is improved.

As an exemplary implementation, on the premise that a quantity of metadata groups is preset, the plurality of pieces of traffic metadata may be randomly grouped into the metadata groups. For example, assuming that the quantity of metadata groups is 50, an average quantity of pieces of traffic metadata that is to be included in each metadata group may be first calculated, and then the corresponding quantity of pieces of traffic metadata is grouped into each metadata group.

The quantity of pieces of traffic metadata grouped into each metadata group may alternatively be uneven. This may be selected according to actual application requirements, and is not limited in this embodiment.

As another exemplary implementation, still on the premise that the quantity of metadata groups is preset, precise grouping of traffic metadata may be further implemented based on respective scores of pieces of traffic metadata. The precise grouping means that the pieces of traffic metadata grouped into the same metadata group have similar traffic transmission control manners.

Exemplarily, the score of each piece of traffic metadata in the pieces of traffic metadata may be determined according to the traffic control factor included in each piece of traffic metadata and a preset weight corresponding to the traffic control factor, and then the plurality of pieces of traffic metadata may be grouped according to the determined scores, to obtain the plurality of metadata groups.

The weight corresponding to each traffic control factor is in positive correlation with an impact degree of the traffic control factor on the traffic transmission control policy. A larger impact of the traffic control factor on the traffic transmission control policy indicates a larger corresponding weight value.

In addition, the impact of the traffic control factor on the traffic transmission control policy of the traffic metadata further includes positive and negative impacts. The positive impact is configured for improving the score, and the negative impact is configured for lowering the score.

Using an example in which the traffic control factors include the priority, the timeliness level, the operation source, and the expected bandwidth, the impact degrees of the traffic control factors on the traffic transmission control policy are to be sequentially reduced. Therefore, the weight values corresponding to the traffic control factors are also to be sequentially reduced. In other words, correlations of the traffic control factors with the score are sequentially reduced.

Exemplarily, when the score of the traffic metadata is represented as score, the score may be calculated according to the following formula:

$$\text{score} = \text{priority} * 10000 + \text{timeliness level} * 100 + \text{operation source} * 10 - \text{expected banwidth}$$

A weight corresponding to the priority is 10000, a weight corresponding to the timeliness level is 100, a weight corresponding to the operation source is 10, and a weight corresponding to the expected bandwidth is 1. It can be seen that the priority, the timeliness level, and the operation source are positively correlated with the score, and the correlation strength with the score decreases sequentially (i.e., from highest to lowest) in the order of priority > timeliness level > operation source, while the expected bandwidth is negatively correlated with the score.

There may be a plurality of manners of grouping the plurality of pieces of traffic metadata according to the scores of the pieces of traffic metadata. This is not limited herein. For example, a score interval corresponding to each metadata group may be preset, and pieces of traffic metadata whose scores are located in the same score interval may be grouped into the same metadata group. For another example, the plurality of pieces of traffic metadata may be arranged first based on a descending order or an ascending order of the scores, and then the pieces of traffic metadata may be grouped into the corresponding metadata groups.

However, no matter which grouping manner is used, pieces of traffic metadata having similar traffic transmission control manners are grouped into the same metadata group. For example, in the foregoing exemplary data transmission scenarios of <watch television> and <listen to radio>, since the two application scenarios are similar, traffic transmission control manners are also similar, and the scores of the pieces of traffic metadata corresponding to the two application scenarios are also close, the pieces of traffic metadata corresponding to the two application scenarios may be grouped into the same metadata group.

In some other exemplary implementations, the quantity of metadata groups may alternatively be dynamically determined according to a quantity of pieces of traffic metadata recorded by the central node device in an actual scenario, rather than being preset. For example, a maximum quantity of pieces of traffic metadata included in each metadata group may be preset, and traffic metadata except the maximum quantity of pieces of traffic metadata is correspondingly grouped into another metadata group, thereby obtaining a plurality of metadata groups.

In some other exemplary implementations, alternatively, only the priority may be considered, and the metadata groups are directly divided according to the priority of the traffic metadata.

In an actual application scenario, the grouping manner may be selected according to actual application requirements. For example, when grouping accuracy is mainly considered, the traffic control factor is selected to first calculate the score of each piece of traffic metadata, and then the plurality of pieces of traffic metadata are grouped into the plurality of metadata groups according to the scores.

S430: Determine, according to a bandwidth upper limit of the edge node device, bandwidth allocation data corresponding to each of the plurality of metadata groups, the bandwidth allocation data including a maximum bandwidth and a minimum bandwidth.

The bandwidth upper limit of each edge node device is recorded in the database. Therefore, a bandwidth size of each metadata group may be allocated according to the bandwidth upper limit of the edge node device, to obtain the bandwidth allocation data corresponding to each metadata group.

Exemplarily, an allocation policy may generally adopt a principle of balancing efficiency and fairness, to divide total traffic of the edge node device into three parts: reserved buffer traffic, traffic allocated based on requirements, and preferentially allocated traffic. The reserved buffer traffic is configured for traffic not included in traffic metadata management; the traffic allocated based on requirements is configured for minimum guarantee, to enable the edge node device to respond to the traffic transmission requirements of the internal systems of the edge node device; and the preferentially allocated traffic is configured for ensuring that important traffic is transmitted preferentially while all traffic is transmitted normally.

The allocation policy may alternatively be adaptively adjusted according to actual requirements. For example, when impact of the traffic not included in traffic metadata management on actual application is not considered, or impact of the traffic not included in traffic metadata management on actual application is small, the allocation policy may not reserve the buffer traffic. For another example, a traffic proportion of each part may be adjusted according to actual application requirements.

Based on the foregoing exemplary allocation policy, a process of determining the bandwidth allocation data of each metadata group may include the following operations.

S431: For each metadata group, determine a ratio of a sum of expected bandwidths included in pieces of metadata in the respective metadata group to a sum of all expected bandwidths included in the plurality of pieces of metadata (that is, all traffic metadata obtained by the central node device) as a bandwidth proportion corresponding to the respective metadata group.

S432: Determine a buffer bandwidth of the edge node device according to the bandwidth upper limit of the edge node device.

S433: Determine a difference between the bandwidth upper limit of the edge node device and the buffer bandwidth of the edge node device as the maximum bandwidth of each metadata group, the maximum bandwidth being same for each metadata group.

S434: For each metadata group, determine the minimum bandwidth according to the bandwidth proportion, the buffer bandwidth, and the maximum bandwidth.

The bandwidth proportion of each metadata group can reflect a bandwidth allocation requirement of each metadata group for the edge node device.

The allocation policy usually presets proportion data of the reserved buffer traffic, for example, 20% of the total traffic of the edge node device is reserved as a reserved buffer. Therefore, in S432, the buffer bandwidth may be determined according to the bandwidth upper limit of the edge node device and the proportion data. The calculation formula is expressed as follows:

$$\text{buffer} = \max\left(\text{down\_max} * 20\%, 20\right)$$

buffer represents a buffer bandwidth of the edge node device, down_max represents a bandwidth upper limit of the edge node device, 20% is a proportion of the reserved buffer traffic preset in the allocation policy, and 20 represents a minimum limit of the buffer bandwidth.

For each metadata group, except for the reserved buffer traffic, all traffic of the edge node device may be configured for traffic transmission and may be configured for increasing a traffic rate limit of each metadata group under a low load condition, thereby improving transmission efficiency. Therefore, in S433, the difference between the bandwidth upper limit of the edge node device and the buffer bandwidth of the edge node device is used as the maximum bandwidth of each metadata group. It can be seen that the maximum bandwidth is also a maximum usable bandwidth of each metadata group.

Exemplarily, a manner of obtaining the maximum bandwidth of each metadata group can be expressed as the following formula:

$$\text{group\_bandmax} = \text{down\_max} - \text{buffer}$$

group_bandmax represents a maximum bandwidth of the metadata group, bufferrepresents a buffer bandwidth of the edge node device, and down_maxrepresents a bandwidth upper limit of the edge node device.

The minimum bandwidth of each metadata group refers to a bandwidth for implementing minimum guaranteed traffic transmission for each metadata group, and is used in a high load condition in which all metadata groups are transmitted concurrently at the minimum bandwidth, while still maintaining health of the transmission channel. As recorded in S434, the minimum bandwidth of each metadata group needs to be determined according to the buffer bandwidth of the edge node device, the bandwidth proportion of each metadata group, and the maximum bandwidth of each metadata group.

Exemplarily, the minimum bandwidth of each metadata group may be determined based on the following process:

determining a reference bandwidth according to the maximum bandwidth;

determining, when the bandwidth proportion is greater than or equal to a preset proportion threshold, the minimum bandwidth according to the bandwidth proportion and the reference bandwidth; and

determining, when the bandwidth proportion is less than the proportion threshold, the minimum bandwidth according to the proportion threshold and the reference bandwidth.

In the foregoing process, the reference bandwidth is a reference value determined based on the maximum bandwidth, and subsequently, the minimum bandwidth of the metadata group is further determined according to the bandwidth proportion of the metadata group.

The proportion threshold is configured for indicating minimum traffic reserved by the edge node device, for ensuring health of the transmission channel when all metadata groups are concurrently transmitted.

When the bandwidth proportion of the metadata group is greater than or equal to the preset proportion threshold, the minimum bandwidth is determined according to the bandwidth proportion and the reference bandwidth; and when the bandwidth proportion is less than the proportion threshold, the minimum bandwidth is determined according to the proportion threshold and the reference bandwidth. Therefore, it can be ensured that the edge node device reserves at least 0.5% of the bandwidth.

Exemplarily, the minimum bandwidth of each metadata group can be calculated through the following formula:

$$\text{group\_bandmin} = \text{grou\_bandmax} \; / \; 2 \; * \; \max\left(\text{band\_proportion}, 0.5\%\right)$$

group_bandmin represents a minimum bandwidth of the metadata group, group_bandmax represents a maximum bandwidth of the metadata group, and band_proportion represents a bandwidth proportion of the metadata group.

It can be seen that the minimum bandwidth of the metadata group is allocated according to the bandwidth proportion after halving the maximum bandwidth, and at least 0.5% of the bandwidth is reserved. The reference bandwidth is obtained after the maximum bandwidth is halved.

However, the reference bandwidth may alternatively be determined based on other manners, rather than directly halving the maximum bandwidth. For example, a suitable reference factor may be determined according to the quantity of pieces of traffic metadata in the metadata group. The reference factor is a positive number less than 1, and a product of the maximum bandwidth and the reference factor is used as the reference bandwidth. When the quantity of pieces of traffic metadata in the metadata group is large, the reference factor may be determined to be a larger value, and the finally determined minimum bandwidth may also be a larger value. When the quantity of pieces of traffic metadata in the metadata group is small, the reference factor may be determined to be a smaller value, and the finally determined minimum bandwidth may also be a smaller value. Therefore, when all traffic in the metadata group is transmitted concurrently by using the minimum bandwidth, the bandwidth of the edge node device can be used to a larger extent.

S440: Generate a traffic transmission control instruction according to the plurality of metadata groups and the bandwidth allocation data, and transmit the traffic transmission control instruction to the edge node device, in order to control data traffic transmitted to the electronic device.

The central node device assembles data of the plurality of metadata groups and bandwidth allocation data corresponding to each metadata group into the traffic transmission control instruction, and transmits the traffic transmission control instruction to the edge node device. The purpose is to cause the edge node device to control the data traffic or service traffic transmitted to (or towards, or via) the central node device by executing the received traffic transmission control instruction. In some embodiments, the assembling may include: encapsulating the metadata groups, bandwidth allocation data, and a control instruction identifier using a predefined field structure; or organizing the metadata groups and bandwidth allocation data in a text-based format, e.g., using key-value pairs or nested tags.

The service traffic transmitted by the edge node device to the central node device is service traffic indicated by routing information included in each piece of traffic metadata, and is service data matching service requirements.

A process in which the edge node device executes the traffic transmission control instruction to control the service traffic transmitted to the central node device is an execution process of the rate limiting implementation module in the structure shown in FIG. 1. For particular execution details, refer to descriptions in subsequent embodiments. Details are not described in this embodiment.

In the technical solution provided in this embodiment, the traffic transmission control instructions for different metadata groups are generated on the central node device, and specific traffic transmission control is performed on the edge node device in response to the traffic transmission control instruction, to resolve a problem of poor stability of cross-node device traffic transmission in an existing distributed cloud scenario.

Refer to FIG. 5. FIG. 5 is a flowchart of a traffic transmission control method according to another exemplary embodiment of this application. The method is applicable to the architecture of cross-cloud node device traffic transmission shown in FIG. 1, and is performed by an electronic device. Specifically, the method may be specifically performed by the edge node device 110 in the architecture shown in FIG. 1, or the method may be specifically performed by the rate limiting implementation module 111 in the edge node device 110.

As shown in FIG. 5, in an exemplary embodiment, the traffic transmission control method includes S510 to S530.

Details are described as follows:

S510: Receive a traffic transmission control instruction transmitted by a central node device, the traffic transmission control instruction carrying bandwidth allocation data corresponding to each of a plurality of metadata groups, and the bandwidth allocation data including a maximum bandwidth and a minimum bandwidth.

For a detailed process in which the central node device transmits the traffic transmission control instruction to the edge node device, refer to descriptions in the previous embodiment. Details are not described in this embodiment.

S520: Transmit, in response to the traffic transmission control instruction and according to the minimum bandwidth corresponding to each metadata group, data traffic corresponding to each metadata group to the central node device.

In response to the traffic transmission control instruction transmitted by the central node device, the edge node device first performs initialization configuration according to the traffic transmission control instruction. The initialization configuration includes sequentially creating metadata groups according to control information carried in the traffic transmission control instruction, configuring a plurality of traffic five-tuples in each metadata group, and setting the expected bandwidth of the metadata group as the minimum bandwidth, to ensure that the traffic transmission channel is not congested in an initial case.

After initialization configuration is completed, the edge node device implements rate limiting on each metadata group according to the minimum bandwidth corresponding to each metadata group. Exemplarily, the edge node device may use a traffic controller to sequentially implement rate limiting on each metadata group, and all five-tuple information groups in each metadata group share the bandwidth upper limit of the edge node device. Internal traffic of the edge node device is delivered to the public network after rate limiting and traffic shaping are performed, and transmitted to the central node device, thereby transmitting the data traffic corresponding to each metadata group to the central node device according to the minimum bandwidth corresponding to each metadata group.

S530: Obtain a real-time congestion detection result of a traffic transmission channel between the central node device and the electronic device; and adjust, based on the real-time congestion detection result, the minimum bandwidth and the maximum bandwidth corresponding to each metadata group, the data traffic transmitted to the central node device.

A heartbeat packet is initiated periodically between the central node device and the edge node device. Specifically, the heartbeat packet may be transmitted by the central node device to the edge node device, or may be transmitted by the edge node device to the central node device. This is not limited in this embodiment.

A priority of the heartbeat packet is the highest among all the packets in the transmitted traffic, to ensure that the heartbeat packet is always transmitted preferentially on the traffic transmission channel between the central node device and the edge node device. When a delay of the heartbeat packet is high or even packet loss occurs, cross-cloud node public network transmission is congested. Therefore, a congestion status of the traffic transmission channel between the central node device and the edge node device may be detected by using a timed heartbeat mechanism.

When the heartbeat packet is transmitted by the central node device to the edge node device, the central node device may detect transmission status of the heartbeat packet, where the transmission status of the heartbeat packet includes, for example, a delay duration, a packet loss case, and the like; and determine, based on the transmission status, the real-time congestion detection result of the traffic transmission channel between the central node device and the edge node device.

The real-time congestion detection result includes a result message indicating that congestion occurs or congestion does not occur. The central node device feeds back the detected real-time congestion detection result to the edge node device in time, so that the edge node device can adjust, in time according to the real-time congestion detection result, the data traffic or service traffic transmitted to the central node device, to avoid a series of problems caused by congestion, thereby improving system stability.

When the heartbeat packet is transmitted by the edge node device to the central node device, the edge node device may detect the transmission status of the heartbeat packet, determine the real-time congestion detection result of the traffic transmission channel between the central node device and the edge node device based on the transmission status, and perform the next operation based on the obtained real-time congestion detection result.

Exemplarily, a process in which the edge node device adjusts, according to the real-time congestion detection result, the minimum bandwidth and the maximum bandwidth corresponding to each metadata group, the data traffic transmitted to the central node device is as follows:

S531: increase, when the real-time congestion detection result indicates that no congestion occurs in the traffic transmission channel, a transmission bandwidth corresponding to each metadata group according to the maximum bandwidth and preset priorities of the plurality of metadata groups.

S532: Re-transmit, when the real-time congestion detection result indicates that congestion occurs in the traffic transmission channel, the data traffic corresponding to each metadata group to the central node device according to the minimum bandwidth corresponding to each metadata group.

In the foregoing control process, when the real-time congestion detection result indicates that no congestion occurs in the traffic transmission channel, a load on the entire system is light. To avoid a phenomenon of bandwidth resource waste of the edge node device caused by the low rate limit of the metadata groups, the transmission bandwidth corresponding to each metadata group may be sequentially increased according to the priorities of the plurality of metadata groups.

When the real-time congestion detection result indicates that congestion occurs in the traffic transmission channel, the load on the entire system is heavy. For example, a plurality of metadata groups exist on the traffic transmission channel to run with a large amount of traffic, and the metadata groups each have a large-traffic transmission requirement. Consequently, a total sum of bandwidths exceeds the bandwidth upper limit of the edge node device. To resolve the problem, transmission control needs to be performed on the service traffic corresponding to each metadata group again according to the minimum bandwidth corresponding to each metadata group, that is, the rate upper limit of each group is reset to the minimum bandwidth, to ensure that the congestion status is released and the system restores the health.

Since congestion detection is performed in real time, the process in which the edge node device adjusts, according to the real-time congestion detection result, the service traffic transmitted to the central node device is also performed dynamically. An entire adjustment process of the edge node device may be represented as: increasing the rate upper limit of each metadata group at a low load to improve entire transmission efficiency; and reducing the traffic upper limit of each metadata group at a high load to avoid congestion and improve system stability.

In addition, for the service traffic corresponding to the traffic metadata not included in the plurality of metadata groups, the edge node device directly allocates an expected bandwidth in the buffer bandwidth based on the expected bandwidth of the service traffic, for transmitting the corresponding service traffic to the central node device. That is, the edge node device does not perform rate limiting processing on the traffic metadata not included in the metadata groups.

In an exemplary embodiment, when the real-time congestion detection result indicates that no congestion occurs in the traffic transmission channel, the process in which the edge node device sequentially increases, according to the priorities of the plurality of metadata groups, the transmission bandwidth corresponding to each metadata group is as follows:

configuring an incremental bandwidth, and determining a metadata group with a highest priority as a target metadata group;

calculating a sum of a current transmission bandwidth of the target metadata group and the incremental bandwidth;

increasing, when the sum does not exceed the maximum bandwidth corresponding to the target metadata group, the transmission bandwidth of the target metadata group to the sum; and

increasing, when the sum exceeds the maximum bandwidth corresponding to the target metadata group, the transmission bandwidth of the target metadata group to the maximum bandwidth, a difference between the sum and the maximum bandwidth being configured for increasing a transmission bandwidth corresponding to a metadata group with a second highest priority.

In this way, transmission bandwidth increase processing is cyclically performed on the metadata group with the currently highest priority based on the incremental bandwidth, until transmission bandwidth increase processing is completed for all the metadata groups.

The metadata group with the currently highest priority refers to a metadata group with the highest priority among the metadata groups that have not undergone transmission bandwidth increase processing. The priority of the metadata group is determined based on the priority of the traffic metadata included in the metadata group, and may be, for example, a priority average value, or a priority maximum value. This is not limited herein. When the priority of the traffic metadata in the metadata group is high, the priority of the metadata group is apparently also high. Conversely, when the priority of the traffic metadata in the metadata group is low, the priority of the metadata group is apparently also low.

Therefore, each time of transmission bandwidth increase processing is performed on the metadata group with the currently highest priority, to ensure that a congestion problem caused by repeated rate increasing does not occur. In addition, in this embodiment, a bandwidth increase amount (that is, the incremental bandwidth) of transmission bandwidth increase processing performed each time is further limited, to avoid the congestion problem caused by excessively fast rate increasing.

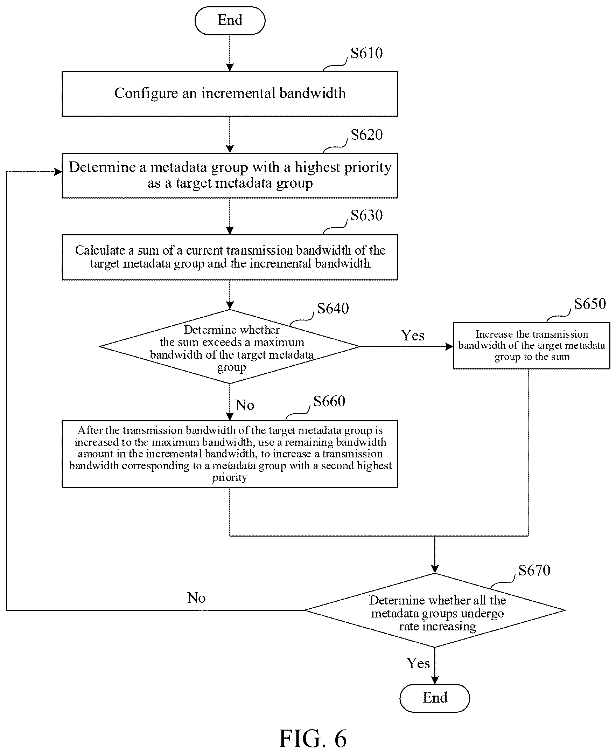

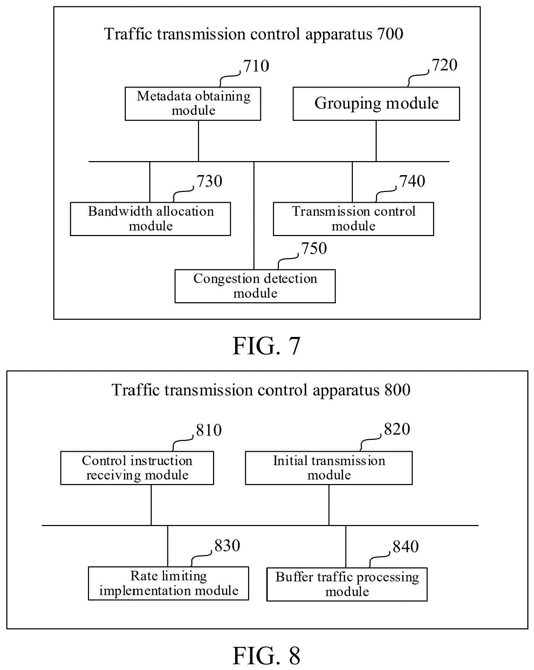

To further facilitate understanding of a rate increasing process provided in this embodiment, a process in which the edge node device sequentially increases, according to the priorities of the plurality of metadata groups, the transmission bandwidth corresponding to each metadata group is described in more detail below by using the procedure described in FIG. 7. As shown in FIG. 6, the rate increasing process includes the following operations.

S610: Configure an incremental bandwidth.

S620: Determine a metadata group with a highest priority as a target metadata group.

S630: Calculate a sum of a current transmission bandwidth of the target metadata group and the incremental bandwidth.

S640: Determine whether the sum exceeds a maximum bandwidth of the target metadata group.

S650: Increase the transmission bandwidth of the target metadata group to the sum.

S660: After the transmission bandwidth of the target metadata group is increased to the maximum bandwidth, use a remaining bandwidth amount (that is, a difference between the sum and the maximum bandwidth) in the incremental bandwidth, to increase a transmission bandwidth corresponding to a metadata group with a next (e.g., second highest) priority.

S670: Determine whether all the metadata groups undergo rate increasing. When not all the metadata groups undergo rate increasing, perform S620, and when all the metadata groups undergo rate increasing, the procedure ends.

It can be seen from the foregoing procedure that, when the current transmission bandwidth of the target metadata group does not exceed the maximum bandwidth of the target metadata group after being increased by the incremental bandwidth, the current transmission bandwidth of the target metadata group is directly increased by the incremental bandwidth, that is, the sum of the current transmission bandwidth of the target metadata group and the incremental bandwidth in S630. When the current transmission bandwidth of the target metadata group exceeds the maximum bandwidth of the target metadata group after being increased by the incremental bandwidth, this is obviously not allowed. In this case, the transmission bandwidth of the target metadata group is first increased to the maximum bandwidth, and then the remaining bandwidth amount of the incremental bandwidth is used as the bandwidth increase amount of the metadata group of the next priority. Then, whether rate increasing is completed for all the metadata groups is determined. That rate increasing is completed for all the metadata groups means that bandwidth upper limits configured by all the metadata groups reach the maximum bandwidth. Therefore, when rate increasing is completed for all the metadata groups, there is no metadata group capable of rate increasing, and therefore, the procedure directly ends. When rate increasing is not completed for all the metadata groups, S620 is performed to continue to perform the next transmission bandwidth increase processing.

It can be seen from the foregoing that, in this embodiment, in a process in which the bandwidth rate limiting value of each metadata group is adjusted, the bandwidth rate limiting value gradually approaches a maximum value of the rate limiting (that is, the maximum bandwidth). Each time the bandwidth is quantitatively increased, the metadata group with the high priority is allocated to undergo rate increasing first, and the metadata group with the low priority is allocated to undergo rate increasing later, which can ensure that grouping traffic with the high priority can be transmitted preferentially until channel congestion occurs.

In addition, after the edge node device responds to initial execution of the traffic transmission control instruction, that is, after the service traffic corresponding to each metadata group is transmitted to the central node device according to the minimum bandwidth corresponding to each metadata group, real-time congestion detection and rate limiting control that is implemented based on the real-time congestion detection result are performed synchronously. In the entire traffic transmission process, the edge node device continuously dynamically adjusts the rate limiting bandwidth of each metadata group according to the real-time congestion detection result.

Therefore, in this embodiment of this application, processes such as grouping rate limiting, real-time congestion detection, and channel self-healing are performed, so that problems such as channel congestion and lost contact with a node caused by large traffic transmission between distributed cloud nodes can be greatly reduced, and stability of the cloud nodes can be effectively improved.

As an effect test of the technical solution, a number of abnormal alarms of the distributed cloud nodes is counted, and an average number of alarms of a single cloud node is reduced from 5 times per month to 0.4 times per month, which is reduced by more than 90%, thereby greatly reducing operation and maintenance pressure of the node. In addition, as recording of traffic metadata is perfected, the number of abnormal alarms gradually tends to be 0.

This embodiment of this application can further effectively improve transmission efficiency of important traffic. Specifically, in an idle state, services can be transmitted with a maximum bandwidth and do not affect each other. In a congestion state, according to traffic priorities, important traffic with a high priority is transmitted first, and traffic with a low priority is transmitted later. Using an edge node device having a public network bandwidth of 100 Mbps as an example, a test result shows that in a congestion situation, an average transmission rate of the traffic with the high priority is increased from 52 Mbps to 76 Mbps, which is increased by about 46%.

Another exemplary embodiment of this application further provides another traffic transmission control system, including a central node device and an edge node device, a metadata management module and a gateway controller being deployed on the central node device, and a rate limiting implementation module being deployed on the edge node device.

The metadata management module, configured to obtain a plurality of pieces of traffic metadata in response to receiving a traffic transmission management request; group the plurality of pieces of traffic metadata, to obtain a plurality of metadata groups; and determine, according to a preset bandwidth upper limit of the edge node device, bandwidth allocation data corresponding to each of the plurality of metadata groups, the bandwidth allocation data comprising a maximum bandwidth and a minimum bandwidth.

The gateway controller, configured to generate a traffic transmission control instruction according to the plurality of metadata groups and the bandwidth allocation data, and transmit the traffic transmission control instruction to the rate limiting implementation module.

The rate limiting implementation module, configured to transmit, in response to the traffic transmission control instruction and according to the minimum bandwidth corresponding to each metadata group, data traffic corresponding to each metadata group to the central node device; obtain a real-time congestion detection result of a traffic transmission channel between the central node device and the edge node device; and adjust, based on the real-time congestion detection result, the minimum bandwidth and the maximum bandwidth corresponding to each metadata group, the data traffic transmitted to the central node device.

The execution processes of various parts of the system have been described in detail in the foregoing embodiments, and are not repeated in this embodiment.

Refer to FIG. 7. FIG. 7 is a block diagram of a traffic transmission control apparatus 700 according to an exemplary embodiment of this application. The apparatus 700 is configured on a central node device. The apparatus 700 includes:

a metadata obtaining module 710, configured to obtain a plurality of pieces of traffic metadata in response to receiving a traffic transmission management request;

a grouping module 720, configured to group the plurality of pieces of traffic metadata, to obtain a plurality of metadata groups;

a bandwidth allocation module 730, configured to determine, according to a preset bandwidth upper limit of an edge node device, bandwidth allocation data corresponding to each of the plurality of metadata groups, the bandwidth allocation data comprising a maximum bandwidth and a minimum bandwidth; and

a transmission control module 740, configured to generate a traffic transmission control instruction according to the plurality of metadata groups and the bandwidth allocation data, and transmit the traffic transmission control instruction to the edge node device, in order to control data traffic transmitted to the electronic device.

In another exemplary embodiment, each piece of traffic metadata in the plurality of pieces of traffic metadata comprises a traffic control factor corresponding to a data transmission scenario; and the grouping module 720 includes:

a score calculation unit, configured to determine a score for each piece of metadata according to the traffic control factor and a preset weight corresponding to the traffic control factor; and

a score processing unit, configured to group the plurality of pieces of metadata according to the score, to obtain the plurality of metadata groups.

In another exemplary embodiment, the traffic control factor includes at least one of a priority, a timeliness level, an operation source, and an expected bandwidth, where the priority, the timeliness level, and the operation source are positively correlated with the score, with correlation strength decreasing sequentially; and the expected bandwidth is negatively correlated with the score.

In another exemplary embodiment, the bandwidth allocation module 730 includes:

a bandwidth proportion calculation unit, configured to, for each metadata group, determine a ratio of a sum of expected bandwidths included in pieces of metadata in the respective metadata group to a sum of all expected bandwidths comprised in the plurality of pieces of metadata, as a bandwidth proportion corresponding to the respective metadata group;

a buffer bandwidth calculation unit, configured to determine a buffer bandwidth of the edge node device according to the bandwidth upper limit of the edge node device;

an upper limit bandwidth calculation unit, configured to determine a difference between the bandwidth upper limit and the buffer bandwidth as the maximum bandwidth, the maximum bandwidth being same for each metadata group; and

a lower limit bandwidth calculation unit, configured to, for each metadata group, determine the minimum bandwidth according to the bandwidth proportion, the buffer bandwidth, and the maximum bandwidth.

In another exemplary embodiment, the lower limit bandwidth calculation unit is configured to:

determine a reference bandwidth according to the maximum bandwidth;

determine, when the bandwidth proportion is greater than or equal to a preset proportion threshold, the minimum bandwidth according to the bandwidth proportion and the reference bandwidth; and

determine, when the bandwidth proportion is less than the proportion threshold, the minimum bandwidth according to the proportion threshold and the reference bandwidth.

In another exemplary embodiment, the apparatus 700 further includes a congestion detection module 750, and the congestion detection module 750 is configured to:

transmit a heartbeat packet to the edge node device in a preset period;

detect transmission status of the heartbeat packet, and determine a real-time congestion detection result of a traffic transmission channel between the electronic device and the edge node device based on the transmission status; and

feed back the real-time congestion detection result to the edge node device.

Refer to FIG. 8. FIG. 8 is a block diagram of a traffic transmission control apparatus 800 according to another exemplary embodiment of this application. The apparatus 800 is configured on an edge node device. The apparatus 800 includes:

a control instruction receiving module 810, configured to receive a traffic transmission control instruction transmitted by a central node device, the traffic transmission control instruction carrying bandwidth allocation data corresponding to each of a plurality of metadata groups, and the bandwidth allocation data including a maximum bandwidth and a minimum bandwidth;

an initial transmission module 820, configured to transmit, in response to the traffic transmission control instruction and according to the minimum bandwidth corresponding to each metadata group, data traffic corresponding to each metadata group to the central node device; and

a rate limiting implementation module 830, configured to obtain a real-time congestion detection result of a traffic transmission channel between the central node device and an electronic device; and adjust, based on the real-time congestion detection result, the minimum bandwidth and the maximum bandwidth corresponding to each metadata group, the data traffic transmitted to the central node device.

In another exemplary embodiment, the rate limiting implementation module 830 includes:

a rate increasing processing unit, configured to, increase, when the real-time congestion detection result indicates that no congestion occurs in the traffic transmission channel, a transmission bandwidth corresponding to each metadata group according to the maximum bandwidth and preset priorities of the plurality of metadata groups; and

a reset processing unit, configured to re-transmit, when the real-time congestion detection result indicates that congestion occurs in the traffic transmission channel, the data traffic corresponding to each metadata group to the central node device according to the minimum bandwidth corresponding to each metadata group.

In another exemplary embodiment, the rate increasing processing unit is configured to:

configure an incremental bandwidth, and determine a metadata group with a highest priority as a target metadata group;

calculate a sum of a current transmission bandwidth of the target metadata group and the incremental bandwidth;

increase, when the sum does not exceed the maximum bandwidth corresponding to the target metadata group, the transmission bandwidth of the target metadata group to the sum;

increase, when the sum exceeds the maximum bandwidth corresponding to the target metadata group, the transmission bandwidth of the target metadata group to the maximum bandwidth, a difference between the sum and the maximum bandwidth being configured for increasing a transmission bandwidth corresponding to a metadata group with a second highest priority.

In another exemplary embodiment, the apparatus 800 further includes a buffer traffic processing module 840, and the buffer traffic processing module 840 is configured to:

for metadata not included in the plurality of metadata groups,

obtain an expected bandwidth included in the metadata; and

allocate the expected bandwidth in a buffer bandwidth of the electronic device, for transmitting data traffic corresponding to the traffic metadata to the central node device.

The traffic transmission control apparatus provided in the foregoing embodiment and the traffic transmission control method provided in the foregoing embodiment are based on the same concept. The specific manners of performing operations by each module and unit of the apparatus have been described in detail in the method embodiment, and are omitted here. When the traffic transmission control apparatus provided in the foregoing embodiment is in practical application, the foregoing functions may be allocated to and completed by different functional modules according to requirements, that is, an inner structure of the apparatus is divided into different functional modules to implement all or a part of the functions described above.

According to an embodiment of this application, an electronic device is further provided, including: one or more processors; and a memory, configured to store one or more programs, the one or more programs, when executed by the one or more processors, causing the electronic device to implement the foregoing traffic transmission control method in the foregoing embodiments.

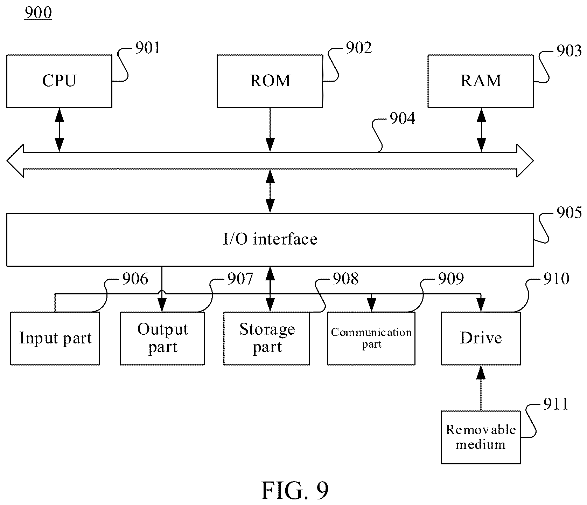

FIG. 9 is a schematic diagram of a structure of an electronic device for implementing an embodiment of this application. A computer system 1000 of the electronic device shown in FIG. 9 is merely an example, and does not constitute any limitation on functions and use ranges of the embodiments of this application.

As shown in FIG. 9, the computer system 900 includes a central processing unit (CPU) 901, which can execute various appropriate actions and processing according to a program stored in a read-only memory (ROM) 902 or a program loaded from a storage part 908 to a random access memory (RAM) 903, such as performing the methods described in the foregoing embodiments. The RAM 903 further has various programs and data required for operating the system stored therein. The CPU 901, the ROM 902, and the RAM 903 are connected to each other through a bus 904. An input/output (I/O) interface 905 is also connected to the bus 904.

The following components are connected to the I/O interface 905: an input part 906 including a keyboard, a mouse, or the like, an output part 907 including a cathode ray tube (CRT), a liquid crystal display (LCD), a speaker, or the like, a storage part 908 including a hard disk, or the like, and a communication part 909 including a network interface card such as a local area network (LAN) card or a modem. The communication part 909 performs communication processing by using a network such as the Internet. A drive 910 is also connected to the I/O interface 905 as required. A removable medium 911, such as a magnetic disk, an optical disc, a magneto-optical disk, or a semiconductor memory, is installed on the drive 910 as required, so that a computer program read from the removable medium is installed into the storage part 908 as required.

Particularly, according to an embodiment of the present application, the processes described above by referring to the flowcharts may be implemented as computer software programs. For example, an embodiment of this application includes a computer program product. The computer program product includes a computer program stored in a computer-readable medium. The computer program includes a computer program configured for performing a method shown in the flowchart. In such an embodiment, the computer program may be downloaded and installed through the communication part 909 from a network, and/or installed from the removable medium 911. When the computer program is executed by the CPU 901, the various functions defined in the system of this application are executed.

The computer-readable medium shown in the embodiments of this application may be a computer-readable signal medium or a computer-readable storage medium or any combination thereof. A more specific example of the computer-readable storage medium may include but is not limited to: an electrical connection having one or more wires, a portable computer magnetic disk, a hard disk, a random access memory (RAM), a read-only memory (ROM), an erasable programmable read-only memory (EPROM), a flash memory, an optical fiber, a compact disk read-only memory (CD-ROM), an optical storage device, a magnetic storage device, or any appropriate combination thereof. The computer program included in the computer-readable medium may be transmitted by using any suitable medium, including but not limited to: a wireless medium, a wire, or the like, or any suitable combination thereof.

The flowcharts and block diagrams in the accompanying drawings illustrate possible system architectures, functions, and operations that may be implemented by a system, a method, and a computer program product according to various embodiments of this application. Each box in a flowchart or a block diagram may represent a module, a program segment, or a part of code. The module, the program segment, or the part of code includes one or more executable instructions configured for implementing designated logic functions. In some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. Each box in the block diagram or the flowchart, and a combination of blocks in the block diagram or the flowchart may be implemented by using a dedicated hardware-based system that performs a specified function or operation, or may be implemented by using a combination of dedicated hardware and computer instructions.

Related units described in the embodiments of this application may be implemented in a software manner, or may be implemented in a hardware manner, and the unit described can also be set in a processor. Names of the units do not constitute a limitation on the units in a specific case.

According to another aspect of this application, a computer-readable storage medium is further provided, on which a computer program is stored. The computer program, when executed by a processor, implements the traffic transmission control method as described above. The computer-readable medium may be included in the electronic device described in the foregoing embodiments, or may exist alone and is not disposed in the electronic device.

According to another aspect of this application, a computer program product or a computer program is further provided, including computer instructions, the computer instructions being stored in a computer-readable storage medium. A processor of a computer device reads the computer instructions from the computer-readable storage medium. The processor executes the computer instructions, so that the computer device performs the traffic transmission control method in the foregoing various embodiments.

What is described above is merely exemplary embodiments of this application, and is not intended to limit the embodiments of this application. A person of ordinary skill in the art can easily make equivalent changes or modifications according to the main concept and spirit of this application.

In a specific implementation of this application, relevant data such as traffic metadata and a bandwidth upper limit is involved. When the foregoing embodiments of this application are applied to specific products or technologies, permission or consent of the user needs to be obtained, and collection, use, and processing of the relevant data need to comply with relevant laws, regulations, and standards of relevant countries and regions.

## Claims

1. A traffic transmission control method, executable by an electronic device, and comprising:

   obtaining a plurality of pieces of metadata in response to receiving a traffic transmission management request;
   grouping the plurality of pieces of metadata, to obtain a plurality of metadata groups;
   determining, according to a preset bandwidth upper limit of an edge node device, bandwidth allocation data corresponding to each of the plurality of metadata groups, the bandwidth allocation data comprising a maximum bandwidth and a minimum bandwidth; and
   generating a traffic transmission control instruction according to the plurality of metadata groups and the bandwidth allocation data, and transmitting the traffic transmission control instruction to the edge node device, in order to control data traffic transmitted to the electronic device.

2. The method according to claim 1, wherein each of the plurality of pieces of metadata comprises a traffic control factor corresponding to a data transmission scenario; and the grouping the plurality of pieces of metadata, to obtain a plurality of metadata groups comprises:

   determining a score for each piece of metadata according to the traffic control factor and a preset weight corresponding to the traffic control factor; and
   grouping the plurality of pieces of metadata according to the score, to obtain the plurality of metadata groups.

3. The method according to claim 2, wherein the traffic control factor comprises at least one of a priority, a timeliness level, an operation source, and an expected bandwidth, wherein

the priority, the timeliness level, and the operation source are positively correlated with the score, with correlation strength decreasing sequentially; and

the expected bandwidth is negatively correlated with the score.

4. The method according to any one of claims 1 to 3, wherein the determining, according to a preset bandwidth upper limit of an edge node device, bandwidth allocation data corresponding to each of the plurality of metadata groups comprises:

for each metadata group, determining a ratio of a sum of expected bandwidths comprised in pieces of metadata in the respective metadata group to a sum of all expected bandwidths comprised in the plurality of pieces of metadata, as a bandwidth proportion corresponding to the respective metadata group;

determining a buffer bandwidth of the edge node device according to the bandwidth upper limit of the edge node device, and determining a difference between the bandwidth upper limit and the buffer bandwidth as the maximum bandwidth, the maximum bandwidth being same for each metadata group; and

for each metadata group, determining the minimum bandwidth according to the bandwidth proportion, the buffer bandwidth, and the maximum bandwidth.

5. The method according to claim 4, wherein the determining the minimum bandwidth according to the bandwidth proportion, the buffer bandwidth, and the maximum bandwidth comprises:

determining a reference bandwidth according to the maximum bandwidth;

determining, when the bandwidth proportion is greater than or equal to a preset proportion threshold, the minimum bandwidth according to the bandwidth proportion and the reference bandwidth; and

determining, when the bandwidth proportion is less than the proportion threshold, the minimum bandwidth according to the proportion threshold and the reference bandwidth.

6. The method according to any one of claims 1 to 5, further comprising:

transmitting a heartbeat packet to the edge node device in a preset period;

detecting transmission status of the heartbeat packet, and determining a real-time congestion detection result of a traffic transmission channel between the electronic device and the edge node device based on the transmission status; and

feeding back the real-time congestion detection result to the edge node device.

7. A traffic transmission control method, executable by an electronic device, and comprising:

receiving a traffic transmission control instruction transmitted by a central node device, the traffic transmission control instruction carrying bandwidth allocation data corresponding to each of a plurality of metadata groups, and the bandwidth allocation data comprising a maximum bandwidth and a minimum bandwidth;

transmitting, in response to the traffic transmission control instruction and according to the minimum bandwidth corresponding to each metadata group, data traffic corresponding to each metadata group to the central node device;

obtaining a real-time congestion detection result of a traffic transmission channel between the central node device and the electronic device; and

adjusting, based on the real-time congestion detection result, the minimum bandwidth and the maximum bandwidth corresponding to each metadata group, the data traffic transmitted to the central node device.

8. The method according to claim 7, wherein the adjusting, based on the real-time congestion detection result, the minimum bandwidth and the maximum bandwidth corresponding to each metadata group, the data traffic transmitted to the central node device comprises:

increasing, when the real-time congestion detection result indicates that no congestion occurs in the traffic transmission channel, a transmission bandwidth corresponding to each metadata group according to the maximum bandwidth and preset priorities of the plurality of metadata groups; and

re-transmitting, when the real-time congestion detection result indicates that congestion occurs in the traffic transmission channel, the data traffic corresponding to each metadata group to the central node device according to the minimum bandwidth corresponding to each metadata group.

9. The method according to claim 8, wherein the increasing a transmission bandwidth corresponding to each metadata group according to the maximum bandwidth and preset priorities of the plurality of metadata groups comprises:

configuring an incremental bandwidth, and determining a metadata group with a highest priority as a target metadata group;

calculating a sum of a current transmission bandwidth of the target metadata group and the incremental bandwidth;

increasing, when the sum does not exceed the maximum bandwidth corresponding to the target metadata group, the transmission bandwidth of the target metadata group to the sum; and

increasing, when the sum exceeds the maximum bandwidth corresponding to the target metadata group, the transmission bandwidth of the target metadata group to the maximum bandwidth, a difference between the sum and the maximum bandwidth being configured for increasing a transmission bandwidth corresponding to a metadata group with a second highest priority.

10. The method according to any one of claims 7 to 9, further comprising:
for metadata not comprised in the plurality of metadata groups,

obtaining an expected bandwidth comprised in the metadata; and

allocating the expected bandwidth in a buffer bandwidth of the electronic device, for transmitting data traffic corresponding to the metadata to the central node device.

11. A traffic transmission control system, comprising a central node device and an edge node device, a metadata management module and a gateway controller being deployed on the central node device, and a rate limiting implementation module being deployed on the edge node device,

the metadata management module being configured to obtain a plurality of pieces of metadata in response to receiving a traffic transmission management request; group the plurality of pieces of metadata, to obtain a plurality of metadata groups; and determine, according to a preset bandwidth upper limit of the edge node device, bandwidth allocation data corresponding to each of the plurality of metadata groups, the bandwidth allocation data comprising a maximum bandwidth and a minimum bandwidth;

the gateway controller being configured to generate a traffic transmission control instruction according to the plurality of metadata groups and the bandwidth allocation data, and transmit the traffic transmission control instruction to the rate limiting implementation module; and

the rate limiting implementation module being configured to transmit, in response to the traffic transmission control instruction and according to the minimum bandwidth corresponding to each metadata group, data traffic corresponding to each metadata group to the central node device; obtain a real-time congestion detection result of a traffic transmission channel between the central node device and the edge node device; and adjust, based on the real-time congestion detection result, the minimum bandwidth and the maximum bandwidth corresponding to each metadata group, the data traffic transmitted to the central node device.

12. A traffic transmission control apparatus, comprising:

a metadata obtaining module, configured to obtain a plurality of pieces of metadata in response to receiving a traffic transmission management request;

a grouping module, configured to group the plurality of pieces of metadata, to obtain a plurality of metadata groups;

a bandwidth allocation module, configured to determine, according to a preset bandwidth upper limit of an edge node device, bandwidth allocation data corresponding to each of the plurality of metadata groups, the bandwidth allocation data comprising a maximum bandwidth and a minimum bandwidth; and

a transmission control module, configured to generate a traffic transmission control instruction according to the plurality of metadata groups and the bandwidth allocation data, and transmit the traffic transmission control instruction to the edge node device, in order to control data traffic transmitted to the electronic device.

13. A traffic transmission control apparatus, comprising:

a control instruction receiving module, configured to receive a traffic transmission control instruction transmitted by a central node device, the traffic transmission control instruction carrying bandwidth allocation data corresponding to each of a plurality of metadata groups, and the bandwidth allocation data comprising a maximum bandwidth and a minimum bandwidth;

an initial transmission module, configured to transmit, in response to the traffic transmission control instruction and according to the minimum bandwidth corresponding to each metadata group, data traffic corresponding to each metadata group to the central node device; and

a rate limiting implementation module, configured to obtain a real-time congestion detection result of a traffic transmission channel between the central node device and an electronic device; and adjust, based on the real-time congestion detection result, the minimum bandwidth and the maximum bandwidth corresponding to each metadata group, the data traffic transmitted to the central node device.

14. An electronic device, comprising:

one or more processors; and

a memory, configured to store one or more programs, the one or more programs, when executed by the one or more processors, causing the electronic device to implement the traffic transmission control method according to any one of claims 1 to 6 or 7 to 10.

15. A computer-readable storage medium, having computer-readable instructions stored therein, the computer-readable instructions, when executed by a processor of a computer, causing the computer to implement the traffic transmission control method according to any one of claims 1 to 6 or 7 to 10.

16. A computer program product, comprising a computer program, the computer program, when executed by a processor, implementing the traffic transmission control method according to any one of claims 1 to 6 or 7 to 10.

Management
input

Operation and
maintenance input

Customer
input

Central node device
120

Metadata management
module 121

Support

Service

Gateway
controller 122

High-performance
gateway

Public network rate limit (10 Gbps)

Public network rate limit (100 Mbps)

| Rate limiting implementation module 111 | Rate limiting implementation module 111 |
|---|---|
| Gateway 1 | Gateway 2 |

Virtual router

Support

Service

Edge node device 110

...

Public network rate limit (100 Mbps)

| Rate limiting implementation module 111 | Rate limiting implementation module 111 |
|---|---|
| Gateway 1 | Gateway 2 |

Virtual router

Support

Service

Edge node device 110

FIG. 1

Start — Metadata management module

200

S210 — Metadata recording → Database

S220 — Traffic grouping

S230 — Grouping rate limit

S240 — Task delivery → Gateway 1 / Gateway 2

End

FIG. 2

FIG. 3

S410

Obtain a plurality of pieces of metadata in response to receiving a traffic transmission management request

S420

Group the plurality of pieces of metadata, to obtain a plurality of metadata groups

S430

Determine, according to a bandwidth upper limit of the edge node device, bandwidth allocation data corresponding to each of the plurality of metadata groups, the bandwidth allocation data including a maximum bandwidth and a minimum bandwidth

S440

Generate a traffic transmission control instruction according to the plurality of metadata groups and the bandwidth allocation data, and transmit the traffic transmission control instruction to the edge node device, in order to control data traffic transmitted to the electronic device

FIG. 4

S510

Receive a traffic transmission control instruction transmitted by a central node device, the traffic transmission control instruction carrying bandwidth allocation data corresponding to each of a plurality of metadata groups, and the bandwidth allocation data including a maximum bandwidth and a minimum bandwidth

S520

Transmit, in response to the traffic transmission control instruction and according to the minimum bandwidth corresponding to each metadata group, data traffic corresponding to each metadata group to the central node device

S530

Obtain a real-time congestion detection result of a traffic transmission channel between the central node device and the electronic device; and adjust, based on the real-time congestion detection result, the minimum bandwidth and the maximum bandwidth corresponding to each metadata group, the data traffic transmitted to the central node device

FIG. 5

End

Configure an incremental bandwidth ⟋ S610

Determine a metadata group with a highest priority as a target metadata group ⟋ S620

Calculate a sum of a current transmission bandwidth of the target metadata group and the incremental bandwidth ⟋ S630

Determine whether the sum exceeds a maximum bandwidth of the target metadata group ⟋ S640

Yes

Increase the transmission bandwidth of the target metadata group to the sum ⟋ S650

No ⟋ S660

After the transmission bandwidth of the target metadata group is increased to the maximum bandwidth, use a remaining bandwidth amount in the incremental bandwidth, to increase a transmission bandwidth corresponding to a metadata group with a second highest priority

No

Determine whether all the metadata groups undergo rate increasing ⟋ S670

Yes

End

FIG. 6

Traffic transmission control apparatus 700

710
Metadata obtaining module

720
Grouping module

730
Bandwidth allocation module

740
Transmission control module

750
Congestion detection module

FIG. 7

Traffic transmission control apparatus 800

810
Control instruction receiving module

820
Initial transmission module

830
Rate limiting implementation module

840
Buffer traffic processing module

FIG. 8

900

CPU ⌐901

ROM ⌐902

RAM ⌐903

⌐904

I/O interface ⌐905

Input part ⌐906

Output part ⌐907

Storage part ⌐908

Communication part ⌐909

Drive ⌐910

Removable medium ⌐911

FIG. 9

## INTERNATIONAL SEARCH REPORT

| International application No. |
|---|
| **PCT/CN2024/118498** |

**A. CLASSIFICATION OF SUBJECT MATTER**

H04L67/10(2022.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXT, ENTXTC, WPABS, DWPI, VCN, CNKI: 边缘, 边沿, 云, 流量, 控制, 带宽, 最大, 上限, 下限, 最小, 分组, 元数据, 权重, 因子, 优先级, edge, cloud, flow, control, bandwidth, max, min, group, weight, factor, priority

**C. DOCUMENTS CONSIDERED TO BE RELEVANT**

| Category* | Citation of document, with indication, where appropriate, of the relevant passages | Relevant to claim No. |
|---|---|---|
| A | CN 112804110 A (SHANGHAI QINIU INFORMATION TECHNOLOGIES CO., LTD.) 14 May 2021 (2021-05-14)<br> description, paragraphs 8-66 | 1-16 |
| A | CN 113162869 A (BEIJING ANXIN ZHITONG TECHNOLOGY CO., LTD.) 23 July 2021 (2021-07-23)<br> entire document | 1-16 |
| A | CN 113285885 A (ALIBABA CLOUD COMPUTING LTD.) 20 August 2021 (2021-08-20)<br> entire document | 1-16 |
| A | US 2020358878 A1 (RELIANCE JIO INFOCOMM LIMITED) 12 November 2020 (2020-11-12)<br> entire document | 1-16 |
| A | US 2021075732 A1 (INTEL CORPORATION) 11 March 2021 (2021-03-11)<br> entire document | 1-16 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 December 2024** | **25 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/118498**

| Patent document cited in search report | | | Publication date (day/month/year) | Patent family member(s) | | | Publication date (day/month/year) |
|---|---|---|---|---|---|---|---|
| CN | 112804110 | A | 14 May 2021 | None | | | |
| CN | 113162869 | A | 23 July 2021 | None | | | |
| CN | 113285885 | A | 20 August 2021 | None | | | |
| US | 2020358878 | A1 | 12 November 2020 | US | 11303727 | B2 | 12 April 2022 |
| US | 2021075732 | A1 | 11 March 2021 | EP | 4002804 | A1 | 25 May 2022 |
| | | | | CN | 114553728 | A | 27 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311563804